# NEUE EUROPÄISCHE PATENTSCHRIFT

(11) **EP 0 992 771 B2**
(45) Veröffentlichungstag und Bekanntmachung des Hinweises auf die Entscheidung über den Einspruch: **14.10.2009**
(45) Hinweis auf die Patenterteilung: 26.10.2005
(21) Anmeldenummer: 99116061.5
(22) Anmeldetag: 16.08.1999
(51) Int. Cl.: G01J 1/44, G06K 7/10, G01N 21/25

(54) **Lichtkontrasttaster**
Luminous contrast detector
Détecteur de contraste lumineux

(30) Priorität: 06.10.1998 DE 19846002
(43) Veröffentlichungstag der Anmeldung: 12.04.2000
(73) Patentinhaber: SICK AG, 79183 Waldkirch (DE)
(72) Erfinder: Hirt, Günter, 77716 Haslach (DE); Kietz, Daniel, 79359 Riegel (DE)
(74) Vertreter: Manitz, Finsterwald & Partner GbR

(56) Entgegenhaltungen:
- EP-A- 0 735 501
- US-A- 4 603 976
- US-A- 5 783 811

## Beschreibung

Die Erfindung betrifft ein Verfahren zur Festlegung der Betriebsbedingungen eines Lichtkontrasttasters, bei dem eine im Betrieb des Lichtkontrasttasters zu erkennende Marke vor oder neben einen Hintergrund in einen Überwachungsbereich des Lichtkontrasttasters gebracht wird. Weiterhin betrifft die Erfindung einen entsprechenden Lichtkontrasttaster mit einem Lichtsender, einer Sendeoptik, einem Lichtempfänger und einer Steuer- und Auswerteschaltung.

Lichtkontrasttaster dienen zum Erkennen von Marken, die zu diesem Zweck mit Sendelicht beaufschlagt werden. Die Identifizierung einer Marke erfolgt anhand des Kontrasts zwischen dem von der Marke reflektierten oder remittierten Licht und dem von einem Hintergrund reflektierten oder remittierten Licht. Dieser zu erkennende Kontrast wird vor dem eigentlichen Überwachungsbetrieb eingelernt (sog. Teachen), indem ein dem Hintergrund entsprechender Signalpegel sowie ein der Marke entsprechender Signalpegel von dem Lichtkontrasttaster bestimmt werden.

Nachteilig an bekannten Lichtkontrasttastern ist, daß dieses Einlernen unabhängig von der genauen Ausprägung des Hintergrunds erfolgt. Dadurch werden die Betriebsbedingungen des Lichtkontrasttasters nicht immer optimal festgelegt. Bei anderen bekannten Lichtkontrasttastern treten falsche Schaltvorgänge auf, falls eine in den Überwachungsbereich gebrachte Marke bezüglich der für das Einlernen verwendeten Marke leicht differierende Reflexions- oder Remissionswerte aufweist. Bei einer weiteren Art bekannter Lichtkontrasttaster sind zusätzliche manuelle Auswahlvorgänge erforderlich, beispielsweise das Einstellen einer Hell- oder einer Dunkel-Schaltung.

In der EP 0 735 501 A2 ist gemäß dem Oberbegriff des Anspruchs 1 eine Farbsensoranordnung zum Lesen farbiger Markierungen offenbart, die Halbleiterstrahlungsquellen mit unterschiedlichen Spektralbereichen verwendet.

Die US 5,783,811 beschreibt eine tragbare Datenerfassungseinrichtung mit mehreren Leuchtdioden und einer 2D-Photosensor-Anordnung zum Einlesen von Bar-Codes.

Es ist eine Aufgabe der Erfindung, ein Verfahren zu schaffen, bei dem die Betriebsbedingungen eines Lichtkontrasttasters bezüglich der sicheren Unterscheidung von Marken und Hintergrund günstiger und weitestgehend automatisch festgelegt werden.

Diese Aufgabe wird gelöst durch ein Verfahren mit den Merkmalen des Anspruchs 1.

Bei dem erfindungsgemäßen Verfahren werden also die einzulernende Marke und verschiedene, vorzugsweise alle Hintergrundbereiche jeweils mit Sendelicht unterschiedlicher Spektralbereiche beaufschlagt. Die dabei ermittelten Signalpegel werden dahingehend ausgewertet, daß für jeden getesteten Spektralbereich der geringste auftretende Unterschied zwischen den der Marke entsprechenden Signalpegeln und den den Hintergrundbereichen entsprechenden Signalpegeln ermittelt wird. Diese jeweils auf einen Testwellenlängenbereich bezogenen Pegelminimaldifferenzen werden untereinander verglichen, um für den nachfolgenden Überwachungsbetrieb des Lichtkontrasttasters denjenigen Testwellenlängenbereich mit der größten Pegelminimaldifferenz auszuwählen.

Dadurch kann der für die Unterscheidung von Marke und Hintergrund relevante Kontrast optimiert werden bezüglich der Sendewellenlänge. In vorteilhafter Weise kann die Auswertung und die entsprechende Auswahl des Betriebswellenlängenbereichs durch Implementierung der erläuterten Schritte in eine elektronischen Steuerschaltung automatisch erfolgen. Ein weiterer Vorteil des Verfahrens besteht darin, daß auch ein komplexer Hintergrund berücksichtigt werden kann, da in dem Differenzbestimmungsschritt unabhängig von der Ausprägung des Hintergrunds derjenige Hintergrundsignalpegel herangezogen wird, der dem Markensignalpegel am nächsten liegt.

Zur Durchführung des Verfahrens werden sowohl die Marke als auch der hiervon zu unterscheidende Hintergrund in den Überwachungsbereich gebracht. Dies kann dadurch geschehen, daß die Marke zu Beginn des Verfahrens in dem Überwachungsbereich positioniert und im weiteren Verlauf des Verfahrens zum Einlernen der Hintergrundbereiche aus dem Überwachungsbereich bewegt wird. Die Marke kann stattdessen auch erst im Laufe des Einlernverfahrens in den Überwachungsbereich gebracht, beispielsweise mittels eines Förderbands bewegt werden, wobei der Zeitpunkt, zu dem die Marke sich im Überwachungsbereich befindet, durch ein mit der Bewegung der Marke gekoppeltes Zusatzsignal angezeigt wird.

Es können zwei, drei oder noch mehr voneinander jeweils abgesetzte Testwellenlängenbereiche vorgesehen sein, insbesondere ein roter, ein grüner und ein blauer Testwellenlängenbereich. Auch nicht sichtbare Testwellenlängenbereiche sind möglich, insbesondere aus dem UV- oder IR-Spektralbereich. Als Sendewellenlängenbereich ist im Rahmen der Erfindung außerdem auch ein sehr enger Wellenlängenbereich zu verstehen, insbesondere eine monochromatische Sendewellenlänge.

Bei den Hintergrundbereichen kann es sich um einen Gegenstand handeln, an dem die Marke angebracht ist, oder um weitere stationäre oder bewegte Gegenstände, wie z.B. ein Förderband, auf dem der die Marke aufweisende Gegenstand bewegt wird.

In einer bevorzugten Weiterbildung des erfindungsgemäßen Verfahrens wird nach Auswahl des Betriebswellenlängenbereichs eine Schaltschwelle festgelegt, die mittig oder im wesentlichen mittig zwischen dem betreffenden Markensignalpegel und dem betreffenden Nächsthintergrundsignalpegel liegt (Schwellenfestlegungsschritt). Diese Schaltschwelle dient in dem eigentlichen Überwachungsbetrieb des Lichtkontrasttasters als Kriterium für die Erzeugung eines Markenfeststellungsignals. Durch die mittige Lage der Schaltschwelle ist gewährleistet, daß der Lichtkontrasttaster im Überwachungsbetrieb eine Marke besonders zuverlässig von einem Hintergrund zu unterscheiden vermag, selbst wenn diese Marke von der eingelernten Marke oder dieser Hintergrund von dem eingelernten Hintergrund jeweils leicht differiert.

Es ist von Vorteil, wenn in dem Schwellenfestlegungsschritt zusätzlich geprüft wird, ob für den Betriebswellenlängenbereich der ermittelte Markensignalpegel zwischen dem ermittelten Nächsthintergrundsignalpegel einerseits und einem weiteren Hintergrundsignalpegel andererseits liegt, d.h. ob der Markensignalpegel zwischen einem tieferen und einem höheren Hintergrundsignalpegel liegt. Falls diese Prüfung ein positives Ergebnis liefert, wird eine weitere Schaltschwelle festgelegt, und zwar mittig zwischen dem Markensignalpegel und dem weiteren Hintergrundsignalpegel. In diesem Fall gelten alle solchen Signalpegel, die zwischen der zuerst festgelegten Schaltschwelle und der weiteren Schaltschwelle liegen, als Schaltpegelbereich, d.h. als Bereich von solchen Signalpegeln, die im Überwachungsbetrieb des Lichtkontrasttasters ein Markenfeststellungssignal erzeugen.

Falls die Prüfung auf das Vorliegen eines weiteren Hintergrundsignalpegels dagegen ein negatives Ergebnis liefert, oder falls eine derartige Prüfung nicht durchgeführt wird, kann als Schaltpegelbereich der Bereich von solchen Signalpegeln gelten, die bezüglich des ermittelten Nächsthintergrundsignalpegels jenseits der Schaltschwelle liegen. Mit anderen Worten erzeugen im Überwachungsbetrieb alle solchen Signalpegel ein Markenfeststellungssignal, die - falls der Markensignalpegel höher liegt als der Nächsthintergrundsignalpegel - oberhalb der Schaltschwelle liegen bzw. die - falls der Markensignalpegel niedriger liegt als der Nächsthintergrundsignalpegel - unterhalb der Schaltschwelle liegen. Durch diese Unterscheidung der beiden möglichen Relativlagen von Markensignalpegel und Nächsthintergrundsignalpegel wird automatisch zwischen einer Hell- und einer Dunkel-Schaltung unterschieden, ohne daß eine entsprechende manuelle Auswahl an dem Lichtkontrasttaster vorgesehen sein muß.

Bei den erläuterten Möglichkeiten der Festlegung des Schaltpegelbereichs kann die jeweilige Schaltschwelle als zu dem Schaltpegelbereich zugehörig oder als hierzu nicht zugehörig gelten.

Es ist bevorzugt, wenn die Signalpegel für mehrere räumliche Teilbereiche der einzulernenden Anordnung zeitlich nacheinander ermittelt werden. Dabei können - solange ein derartiger Teilbereich im Überwachungsbereich des Lichtkontrasttasters liegt - nacheinander die Signalpegel für die verschiedenen Testwellenlängenbereiche ermittelt werden.

Beispielsweise ist es möglich, die gesamte einzulernende Anordnung von Marke und Hintergrund durch den Überwachungsbereich zu bewegen und gleichzeitig den Überwachungsbereich zyklisch abwechselnd mit Sendelicht der verschiedenen Testwellenlängenbereiche zu beaufschlagen. Wenn dabei die Frequenz des Wechsels zwischen den verschiedenen Testwellenlängenbereichen (Farbwechselfrequenz) wesentlich höher gewählt wird, als der Quotient aus der Bewegungsgeschwindigkeit der Anordnung und der geringsten aufzulösenden Ausdehnung von Marke oder Hintergrund, so kann bei lediglich einmaligem Durchfahren der Anordnung durch den Überwachungsbereich für alle Testwellenlängenbereiche ein nahezu kontinuierlicher Verlauf der Signalpegel ermittelt werden. Hierfür ist ein einziger Lichtempfänger ausreichend, falls eine mit dem Lichtempfänger verbundene Auswerteschaltung die Farbwechselfrequenz kennt.

Alternativ hierzu kann die einzulernende Anordnung von Marke und Hintergrund für jeden Testwellenlängenbereich eigens durch den Überwachungsbereich bewegt werden. Es ist auch möglich, anstatt diese Anordnung zu bewegen, die Lage des Überwachungsbereichs zu ändern, beispielsweise durch periodische Ablenkung des Sendelichtstrahls mittels eines Polygonspiegels. Weiterhin kann eine stationäre Anordnung von Marke und Hintergrund dem Lichtkontrasttaster eingelernt werden, wenn ein ortsauflösender Lichtempfänger, beispielsweise ein CCD-Sensor, vorgesehen wird, der zu einem gegebenen Zeitpunkt die gesamte Anordnung erfassen kann, während diese mit Sendelicht zumindest eines der Testwellenlängenbereiche beaufschlagt wird.

Die erläuterten Schritte der Signalpegelaufnahme bzw. -auswertung können teilweise oder allesamt gleichzeitig durchgeführt werden. In diesem Fall erfolgt die Auswertung on-line, und das Ergebnis dieser Auswertung, beispielsweise die Festlegung der Schaltschwelle, wird bis zur Beendigung des Verfahrens ständig aktualisiert. Stattdessen kann die Auswertung der Signalpegel auch erst dann erfolgen, wenn bereits alle Markensignalpegel und Hintergrundsignalpegel für jeden Testwellenlängenbereich ermittelt worden sind. Selbstverständlich müssen bei allen genannten Möglichkeiten des Ablaufs des Verfahrens die für die Auswertung später noch benötigten Werte, beispielsweise die ermittelten Signalpegel oder die aktuell festgelegte Schaltschwelle, zwischengespeichert werden.

Das Verfahren kann automatisch beendet werden, sobald eine weitere Marke innerhalb des Überwachungsbereichs erkannt wird. Dieses Wiedererkennen kann auf bekannte Weise durch geeignete Algorithmen und auf Grundlage einer bereits eingelernten ersten Marke erfolgen. Diese Vorgehensweise eignet sich insbesondere bei einer periodischen Anordnung von Marken, die kontinuierlich durch den Überwachungsbereich des Lichtkontrasttasters bewegt wird. Eine dieser Anordnung entsprechende Rapportlänge und/oder ein externer Takt können zur automatischen Beendigung des Verfahrens verwendet werden. Selbstverständlich ist es auch möglich, eine manuelle Beendigung vorzusehen.

Eine weitere Aufgabe der Erfindung besteht darin, einen Lichtkontrasttaster zu schaffen, der bei einfachem Aufbau eine weitestgehend automatische Festlegung von bezüglich der sicheren Unterscheidung von Marken und Hintergrund günstigen Schaltbedingungen ermöglicht.

Diese Aufgabe wird durch einen Lichtkontrasttaster mit den Merkmalen des Anspruchs 9 gelöst.

Der erfindungsgemäße Lichtkontrasttaster ermöglicht es, entsprechend dem erfindungsgemäßen Verfahren den Kontrast zwischen Marke und Hintergrund bezüglich der Sendewellenlänge zu optimieren, indem aus mehreren verschiedenen Testwellenlängenbereichen die größte Pegelminimaldifferenz bestimmt wird und im weiteren Betrieb des Lichtkontrasttasters allein die entsprechende Sendewellenlänge verwendet wird. Dabei kann für den Lichtkontrasttaster im wesentlichen ein bekannter einfacher Aufbau, beispielsweise nach dem Prinzip der Autokollimation oder der Pupillenteilung, vorgesehen sein. Es ist lediglich erforderlich, den erläuterten Verfahrensablauf in der Steuer- und Auswerteschaltung zu implementieren.

Vorzugsweise weist der Lichtsender des Lichtkontrasttasters innerhalb eines gemeinsamen Gehäuses mehrere benachbarte Sendeelemente auf, beispielsweise drei Lichtemissionsdioden (LED).

Außerdem ist bevorzugt, wenn die Sendeoptik dergestalt ausgebildet ist, daß die Abbildung des Sendelichts der mehreren Testwellenlängenbereiche an der Marke oder dem Hintergrund als räumlich überlappende Lichtflecken erscheint. Durch die Schnittmenge dieser Lichtflecken, die über eine entsprechende Empfangsoptik auf den Lichtempfänger abgebildet wird, ist also ein den mehreren Testwellenlängenbereichen gemeinsamer Überwachungsbereich definiert. Insbesondere kann für mehrere benachbarte Sendeelemente die Sendeoptik eine Zylinderlinse aufweisen, durch welche die Abbildung des Sendelichts der Sendeelemente auf den gemeinsamen Überwachungsbereich erfolgt.

Das Sendelicht mehrerer benachbarter Sendeelemente kann jedoch auch auf entsprechend mehrere benachbarte Überwachungsbereiche an der Marke oder dem Hintergrund abgebildet werden, insbesondere falls die Ausdehnung dieser Überwachungsbereiche geringer ist als die jeweilige Ausdehnung der Marke bzw. der farblich voneinander verschiedenen Hintergrundbereiche.

Alternativ zu dem Aufbau des Lichtsenders aus mehreren Sendeelementen kann ein einziges Sendeelement als Lichtsender fungieren, welches Licht unterschiedlicher Wellenlängenbereiche insbesondere zeitlich versetzt zueinander auszusenden vermag. In diesem Fall genügt eine übliche Sammellinse, um die verschiedenen Testwellenlängenbereiche auf einen gemeinsamen Überwachungsbereich abzubilden.

Weitere bevorzugte Ausführungsformen des Verfahrens und des Lichtkontrasttasters gemäß der Erfindung sind in den Unteransprüchen beschrieben. Die Erfindung wird nachfolgend beispielhaft anhand der Zeichnungen erläutert. In diesen zeigen:
- Fig. 1: eine einzulernende Anordnung von Marke und Hintergrund,
- Fig. 2a - 2c: dieser Anordnung entsprechende Signalpegelverläufe, jeweils für verschiedene Testwellenlängenbereiche, und
- Fig. 3: eine Querschnittsansicht von Teilen eines erfindungsgemäßen Lichtkontrasttasters.

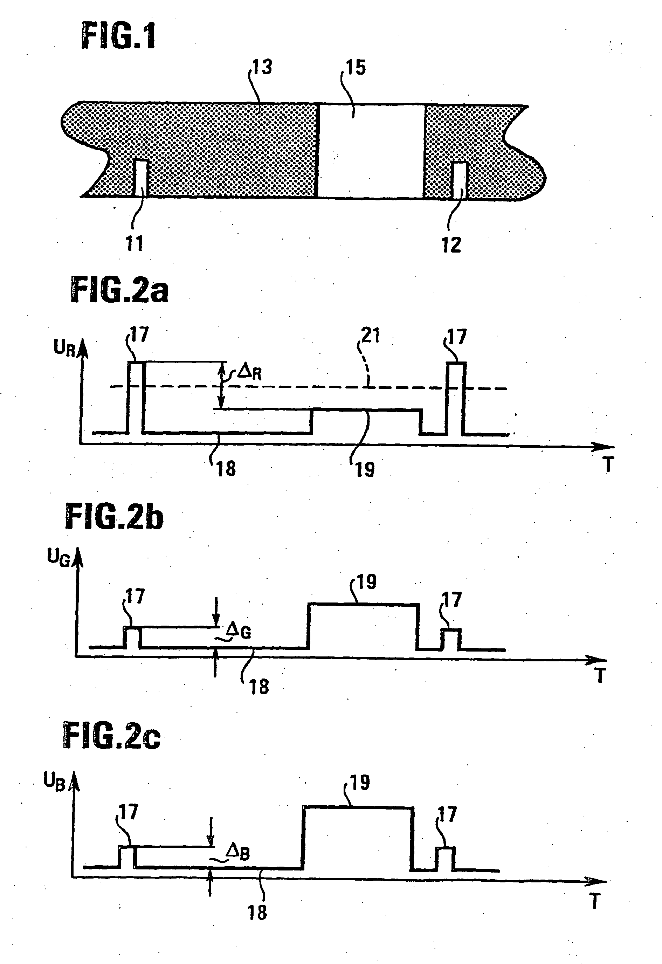

Fig. 1 zeigt in schematischer Draufsicht eine erste Marke 11, eine zweite Marke 12 sowie verschiedene Bereiche 13, 15 eines Hintergrunds hierzu. Beispielsweise kann es sich bei dem Hintergrundbereich 13 um einen mittels eines Förderbands bewegten Gegenstand handeln, an dem die Marke 11 bzw. 12 angebracht ist, während der Hintergrundbereich 15 durch das Förderband selbst oder durch Verpackungsmaterial gebildet ist. Die Marken 11, 12 einerseits und die verschiedenen Bereiche 13, 15 des Hintergrunds andererseits besitzen jeweils eine unterschiedliche Farbe; beispielsweise sind die Marken 11, 12 rot und die Hintergrundbereiche 13, 15 sind schwarz bzw. türkis.

Für diese Anordnung kann erfindungsgemäß auf folgende Weise für einen Lichtkontrasttaster eine optimierte Schaltbedingung für die Unterscheidung der Marken 11, 12 von den Hintergrundbereichen 13, 15 festgelegt werden:

Der Einlernvorgang wird eingeleitet, indem die erste Marke 11 mittels des Förderbands bezüglich Fig. 1 nach links in einen stationären Überwachungsbereich des betreffenden Lichtkontrasttasters bewegt wird und das Vorhandensein dieser einzulernenden Marke 11 innerhalb des Überwachungsbereichs dem Lichtkontrasttaster mitgeteilt wird. Diese Mitteilung kann entweder durch ein elektrisches Signal erfolgen, das durch Kenntnis sowohl der Lage der Marke 11 auf dem Förderband als auch der Bewegungsgeschwindigkeit des Förderbands erzeugt werden kann, oder durch einfache manuelle Betätigung einer entsprechenden an dem Lichtkontrasttaster angebrachten START-Taste.

In einem Pegelaufnahmeschritt werden nun die Marke 11 und bei weiterer Bewegung des Förderbands die entsprechend in Bewegungsrichtung benachbarten, von der Marke 11 farblich abgesetzten Bereiche 13, 15 mit Sendelicht beaufschlagt, das einem Farbwechseltakt folgend zyklisch zwischen einem roten, einem grünen und einem blauen Testwellenlängenbereich abwechselt. Die Anordnung gemäß Fig. 1 wird mit einer solchen Geschwindigkeit durch den Überwachungsbereich bewegt, daß weder die Marken 11, 12 noch die Hintergrundbereiche 13, 15 während dreier Farbwechseltakte - d.h. während eines vollständigen Farbwechselzyklus - vollständig an dem Überwachungsbereich vorbeibewegt werden. Auf diese Weise ist sichergestellt, daß alle relevanten Farbbereiche 11, 13, 15, 12 der Anordnung von dem Lichtkontrasttaster erfaßt werden können, und zwar jeweils für jeden Testwellenlängenbereich.

Ein Lichtempfänger des Lichtkontrasttasters ermittelt während des Pegelaufnahmeschritts für die drei Testwellenlängenbereiche Rot, Grün und Blau den jeweiligen Intensitätsverlauf des innerhalb des Überwachungsbereichs reflektierten oder remittierten Testsendelichts. Die am Ausgang des Lichtempfängers beispielsweise in Form von elektrischen Spannungen vorliegenden entsprechenden Signalpegel U_{R}, U_{G} bzw. U_{B} sind in den Fig. 2a, 2b bzw. 2c dargestellt, und zwar jeweils für verschiedene Zeitpunkte T. Die in den Fig. 2a, 2b und 2c gezeigten zeitlichen Verläufe entsprechen aufgrund der Bewegung des Förderbands entlang des Überwachungsbereichs der räumlichen Anordnung gemäß Fig. 1. Somit geht aus Fig. 2a, 2b und 2c die Zuordnung der Markensignalpegel 17 zu den Marken 11, 12 und die Zuordnung der Hintergrundsignalpegel 18 und 19 zu den Hintergrundbereichen 13 bzw. 15 hervor.

In einem Differenzbestimmungsschritt wird für jeden Testwellenlängenbereich der jeweils geringste zu ermittelnde Unterschied Δ_{R}, Δ_{G} bzw. Δ_{B} zwischen dem betreffenden Markensignalpegel 17 und dem an die Höhe dieses Markensignalpegels 17 am nächsten heranreichenden Hintergrundsignalpegel 18 oder 19 (Nächsthintergrundsignalpegel) bestimmt. In dem gezeigten Beispiel ist der Nächsthintergrundsignalpegel für den roten Testwellenlängenbereich durch den Hintergrundsignalpegel 19 (entsprechend dem Hintergrundbereich 15) und für den grünen und den blauen Testwellenlängenbereich jeweils durch den Hintergrundsignalpegel 18 (entsprechend dem Hintergrundbereich 13) gebildet.

Die Bestimmung der Pegelminimaldifferenz kann nach jedem Farbwechseltakt erfolgen, also für jeden neu in den Überwachungsbereich gebrachten Bereich 11, 13, 15, 12 der Anordnung jeweils bereits nach jedem Wechsel des Testwellenlängenbereichs. Dabei wird eine zuvor schon ermittelte Pegelminimaldifferenz gegebenenfalls aktualisiert. Derjenige Testwellenlängenbereich mit der aktuell größten Pegelminimaldifferenz gilt bis zur Beendigung des Einlernvorgangs als Betriebswellenlängenbereich, sofern nicht in einem weiteren Farbwechseltakt eine noch größere Pegelminimaldifferenz ermittelt wird.

Der Einlernvorgang wird beendet, sobald die zweite Marke 12 den Überwachungsbereich durchläuft. Diese zweite Marke 12 kann aufgrund des anhand der ersten Marke 11 bereits ermittelten Signalpegelverlaufs automatisch erkannt werden, beispielsweise mittels eines Algorithmus, der die Höhe des Signalpegels 17 der Marke 11 und die Höhe des Signalpegels 18 des nachfolgend in den Überwachungsbereich geführten Hintergrundbereichs 13 für einen, mehrere oder alle Testwellenlängenbereiche berücksichtigt.

In dem dargestellten Beispiel steht nach Beendigung des Einlernvorgangs also der rote Sendewellenlängebereich als Betriebswellenlängenbereich fest. Für den Überwachungsbetrieb mit diesem Betriebswellenlängenbereich wird nun eine Schaltschwelle 21 bestimmt, die mittig zwischen dem Markensignalpegel 17 und dem Nächsthintergrundsignalpegel 19 liegt (vgl. Fig. 2a). Als Schaltpegelbereich wird der Bereich von Signalpegeln festgelegt, die oberhalb dieser Schaltschwelle 21 liegen. Der Lichtkontrasttaster ist somit auf Hell-Schaltung eingestellt.

Bei dem erfindungsgemäßen Verfahren können der Einlernvorgang und der eigentliche Überwachungsbetrieb zeitlich überlappen: Aufgrund der erläuterten ständigen Aktualisierung der ermittelten Pegelminimaldifferenzen und der voraussichtlichen Betriebswellenlänge sowie aufgrund der automatischen Erkennung der zweiten Marke 12 überwacht der Lichtkontrasttaster bereits auf Erkennung einer weiteren Marke 12, während noch neue Hintergrundbereiche 15 eingelernt werden.

Der Benutzer kann bei der erläuterten automatischen Erkennung der zweiten Marke 12 nicht unbedingt das Ende des Einlernvorgangs und den Beginn des eigentlichen Überwachungsbetriebs erkennen. Bei der anhand der Fig. 1 und 2a bis 2c erläuterten Verfahrensweise äußert sich das Ende des Einlernvorgangs lediglich dadurch, daß nicht mehr Sendelicht der drei Testwellenlängenbereiche (hier: rot, grün, blau) entsprechend dem Farbwechseltakt ausgesandt wird, sondern im weiteren Überwachungsbetrieb Sendelicht allein des Betriebswellenlängenbereichs (hier: rot). Da also die nicht weiter verwendeten Testwellenlängenbereiche wegfallen, erhöht sich ab Ende des Einlernvorgangs die Frequenz, mit welcher das Betriebssendelicht des ausgesandt wird.

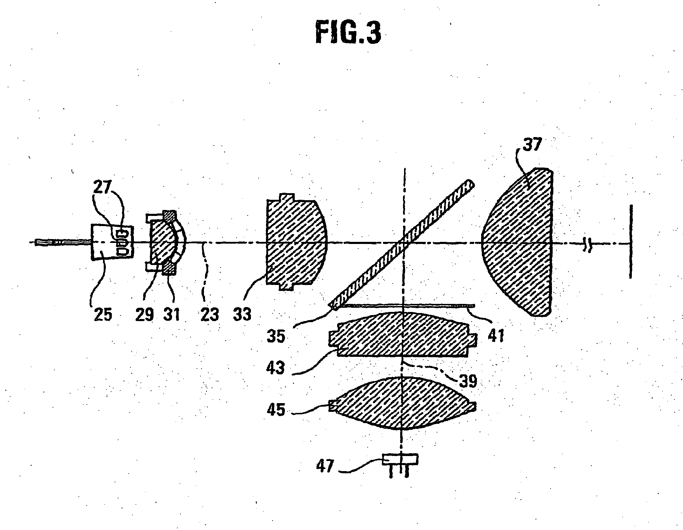

Fig. 3 zeigt in einer Schnittansicht Teile eines erfindungsgemäßen Lichtkontrasttasters. Dieser Lichtkontrasttaster besitzt entlang einer Sendeachse 23 einen Lichtsender 25 mit drei innerhalb eines gemeinsamen Gehäuses benachbart nebeneinander angeordneten Lichtemissionsdioden 27, eine Zylinderlinse 29 mit einer Blende 31, eine Plankonvexlinse 33, einen um 45° verkippten Teilerspiegel 35 und eine Plankonvexlinse 37.

Entlang einer Empfangsachse 39, welche die Sendeachse 23 im Zentrum des Teilerspiegels 35 in rechtem Winkel schneidet, weist der dargestellte Lichtkontrasttaster eine Blende 41, eine Plankonvexlinse 43, eine Bikonvexlinse 45 und eine als Lichtempfänger fungierende Photodiode 47 auf.

### Bezugszeichenliste

- 11: Marke
- 12: Marke
- 13: Hintergrundbereich
- 15: Hintergrundbereich
- 17: Markensignalpegel
- 18: Hintergrundsignalpegel
- 19: Hintergrundsignalpegel
- 21: Schaltschwelle
- 23: Sendeachse
- 25: Lichtsender
- 27: Lichtemissionsdiode
- 29: Zylinderlinse
- 31: Blende
- 33: Plankonvexlinse
- 35: Teilerspiegel
- 37: Plankonvexlinse
- 39: Empfangsachse
- 41: Blende
- 43: Plankonvexlinse
- 45: Bikonvexlinse
- 47: Photodiode

- Δ_{R}: Pegelminimaldifferenz für roten Testwellenlängenbereich
- Δ_{G}: Pegelminimaldifferenz für grünen Testwellenlängenbereich
- Δ_{B}: Pegelminimaldifferenz für blauen Testwellenlängenbereich
- T: Zeit
- U_{R}: Signalpegel für roten Testwellenlängenbereich
- U_{G}: Signalpegel für grünen Testwellenlängenbereich
- U_{B}: Signalpegel für blauen Testwellenlängenbereich

## Patentansprüche

1. Verfahren zur Festlegung der Betriebsbedingungen eines Lichtkontrasttasters,
bei dem eine im Betrieb des Lichtkontrasttasters zu erkennende Marke (11) vor oder neben einen Hintergrund (13, 15) in einen Überwachungsbereich (49) des Lichtkontrasttasters gebracht wird,
**dadurch gekennzeichnet,**
**daß** vor dem Betrieb des Lichtkohtrasttasters
- in einem Pegelaufnahmeschritt bei Beaufschlagung des Überwachungsbereichs (49) mit Sendelicht mehrerer verschiedener Testwellenlängenbereiche jeweils die Signalpegel (17 bzw. 18) des von der Marke (11, 12) und farblich von einander verschiedenen Hintergrundbereichen (13, 15) reflektierten oder remittierten Lichts (Markensignalpegel bzw. Hintergrundsignalpegel) mittels eines Lichtempfängers (47) ermittelt werden,
- in einem Differenzbestimmungsschritt für jeden Testwellenlängenbereich der dem Markensignalpegel (17) nächste Hintergrundsignalpegel (19) (Nächsthintergrundsignalpegel) ermittelt und die Differenz (Δ_{R}, Δ_{G} bzw. Δ_{B}) zwischen dem Markensignalpegel (17) und dem Nächsthintergrundsignalpegel (19) (Pegelminimaldifferenz) bestimmt wird, und
- in einem Farbauswahlschritt derjenige Testwellenlängenbereich mit der größten Pegelminimaldifferenz (Δ_{R}) als Betriebswellenlängenbereich ausgewählt wird.

2. Verfahren nach Anspruch 1,
**dadurch gekennzeichnet,**
**daß** in einem Schwellenfestlegungsschritt als Schaltschwelle (21) für die Erzeugung eines Markenfeststellungssignals ein solcher Signalpegel festgelegt wird, der für den Betriebswellenlängenbereich zumindest im wesentlichen mittig zwischen dem Markensignalpegel (17) und dem Nächsthintergrundsignalpegel (19) liegt.

3. Verfahren nach Anspruch 2,
**dadurch gekennzeichnet,**
**daß** in dem Schwellenfestlegungsschritt geprüft wird, ob für den Betriebswellenlängenbereich bezüglich des Nächsthintergrundsignalpegels (19) jenseits des Markensignalpegels (17) ein weiterer Hintergrundsignalpegel liegt, und
**daß** zutreffendenfalls als weitere Schaltschwelle ein solcher Signalpegel festgelegt wird, der für den Betriebswellenlängenbereich zumindest im wesentlichen mittig zwischen dem Markensignalpegel und dem weitereren Hintergrundsignalpegel liegt, und in einem Bereichfestlegungsschritt als Schaltpegelbereich alle solchen Signalpegel festgelegt werden, die zwischen der Schaltschwelle und der weiteren Schaltschwelle liegen.

4. Verfahren nach Anspruch 2,
**dadurch gekennzeichnet,**
**daß** falls der Markensignalpegel (17) höher liegt als der Nächsthintergrundsignalpegel (19), in einem Bereichfestlegungsschritt als Schaltpegelbereich alle solchen Signalpegel festgelegt werden, die für den Betriebswellenlängenbereich oberhalb der Schaltschwelle (21) liegen, und
**daß** andernfalls in dem Bereichfestlegungsschritt als Schaltpegelbereich alle solchen Signalpegel festgelegt werden, die für den Betriebswellenlängenbereich unterhalb der Schaltschwelle (21) liegen.

5. Verfahren nach Anspruch 3 oder Anspruch 4,
**dadurch gekennzeichnet,**
**daß** im Betrieb des Lichtkontrasttasters ein Markenfeststellungssignal erzeugt wird, falls bei Beaufschlagung des Überwachungsbereichs mit Sendelicht des Betriebs-Wellenlängenbereichs ein Signalpegel innerhalb des Schaltpegelbereichs liegt.

6. Verfahren nach einem der vorhergehenden Ansprüche,
**dadurch gekennzeichnet,**
**daß** in dem Pegelaufnahmeschritt der Überwachungsbereich (49) mit dem Sendelicht der mehreren Testwellenlängenbereiche jeweils nacheinander beaufschlagt wird, insbesondere zyklisch abwechselnd und/oder getaktet, und/oder
**daß** die Marke (11, 12) während des Pegelaufnahmeschritts entlang des Überwachungsbereichs (49) bewegt wird.

7. Verfahren nach einem der vorhergehenden Ansprüche,
**dadurch gekennzeichnet,**
**daß** von dem Pegelaufnahmeschritt, dem Differenzbestimmungsschritt, dem Farbauswahlschritt, dem Schwellenfestlegungsschritt und dem Bereichfestlegungsschritt mehrere Schritte, insbesondere alle Schritte im wesentlichen gleichzeitig durchgeführt werden, oder
**daß** der Pegelaufnahmeschritt, der Differenzbestimmungsschritt, der Farbauswahlschritt, der Schwellenfestlegungsschritt und der Bereichfestlegungsschritt nacheinander durchgeführt werden.

8. Verfahren nach einem der vorhergehenden Ansprüche,
**dadurch gekennzeichnet,**
**daß** das Verfahren automatisch beendet wird, wenn eine weitere Marke (12) innerhalb des Überwachungsbereichs (49) erkannt wird, und/oder
**daß** in dem Pegelaufnahmeschritt der Überwachungsbereich (49) mit Sendelicht von drei verschiedenen Testwellenlängenbereichen beaufschlagt wird, insbesondere mit Sendelicht eines roten, eines grünen und eines blauen Testwellenlängenbereichs.

9. Lichtkontrasttaster zur Erkennung von Marken (11, 12) und zur Durchführung des Verfahrens nach einem der vorhergehenden Ansprüche,
mit einem Lichtsender (25) zum Aussenden von Sendelicht durch eine Sendeoptik (29, 33, 37), mit einem Lichtempfänger (47) zum Empfang von reflektiertem oder remittiertem Sendelicht, und mit einer Steuer- und Auswerteschaltung,
**dadurch gekennzeichnet,**
**daß** der Lichtsender (25) zum Aussenden von Sendelicht mehrerer verschiedener Testwellenlängenbereiche ausgebildet ist,
**daß** der Lichtkontrasttaster Mittel zur Ermittlung eines Nächsthintergrundsignalpegels und der Differenz zwischen einem Markensignalpegel und dem Nächsthintergrundsignalpegel, d.h. eine Pegelminimaldifferenz, für jeden Testwellenlängenbereich aufweist, und
**dass** der Lichtkontrasttaster Mittel zur Auswahl der grössten Pegelminimaldifferenz aufweist.

10. Lichtkontrasttaster nach Anspruch 9,
**dadurch gekennzeichnet,**
**dass** der Lichtsender (25) zum Aussenden von Sendelicht mehrerer verschiedener Testwellenlängenbereiche eine entsprechende Anzahl einander räumlich benachbarter Sendeelemente aufweist, insbesondere mehrere Lichtemissionsdioden (27).

11. Lichtkontrasttaster nach Anspruch 10,
**dadurch gekennzeichnet,**
**dass** die Sendeelemente (27) entlang einer Reihe und/oder innerhalb eines gemeinsamen Gehäuses (25) angeordnet sind.

12. Lichtkontrasttaster nach einem der Ansprüche 9 bis 11,
**dadurch gekennzeichnet,**
**daß** die Testwellenlängenbereiche im roten, im grünen und im blauen Wellenlängenbereich des Lichts liegen.

13. Lichtkontrasttaster nach einem der Ansprüche 9 bis 12,
**dadurch gekennzeichnet,**
**daß** die Sendeoptik (29, 33, 37) zur räumlich überlappenden Abbildung des Sendelichts der mehreren Testwellenlängenbereiche ausgebildet ist, so daß der überlappende Bereich einen gemeinsamen Überwachungsbereich (49) des Lichtkontrasttasters bildet,
wobei die Sendeoptik insbesondere eine Zylinderlinse (29) aufweist, durch die das Sendelicht eines Sendeelements (27) letztlich jeweils als ein im Querschnitt längsovalförmiger Sendestrahl auf den Überwachungsbereich abbildbar ist.

14. Lichtkontrasttaster nach einem der Ansprüche 9 bis 13,
**dadurch gekennzeichnet,**
**daß** der Lichtsender (25) zum nacheinander erfolgenden Aussenden von Sendelicht der verschiedenen Testwellenlängenbereiche ausgebildet ist, und/oder
**daß** der Lichtempfänger als ein Einzelempfangselement, insbesondere als eine Photodiode (47) ausgebildet ist.

15. Lichtkontrasttaster nach einem der Ansprüche 9 bis 14,
**dadurch gekennzeichnet,**
**daß** durch die Steuer- und Auswerteschaltung ein Farbwechseltakt erzeugbar ist, durch den der Lichtsender (25) zum abwechselnden Aussenden von Sendelicht jeweils eines anderen der Testwellenlängenbereiche veranlaßbar ist, und
**daß** durch die Steuer- und Auswerteschaltung entsprechend dem Farbwechseltakt jeweils ein solcher Signalpegel des Lichtempfängers einlesbar ist, der einem der Testwellenlängenbereiche zugeordnet ist.

## Claims

1. A method of setting the operating conditions of a light contrast detector,
wherein a mark (11) to be recognized in the operation of the light contrast detector is brought in front of or next to a background (13, 15) in a monitored zone (49) of the light contrast detector,
**characterized in that,**
before the operation of the light contrast detector,
- the respective signal levels (17 and 18) of the light reflected or remitted by the mark (11, 12) and by background regions (13, 15) differing from one another in color (mark signal level or background signal level) are determined in a level recording step by means of a light receiver (47), when the monitored zone (49) is exposed to transmitted light of a plurality of different test wavelength ranges,
- the background signal level (19) closest to the mark signal level (17) (closest background signal level) is determined in a difference determination step for each test wavelength range and the difference (Δ_{R}, Δ_{G} and Δ_{B} respectively) between the mark signal level (17) and the closest background signal level (19) (minimum level difference) is determined, and
- that test wavelength range with the largest minimum level difference (Δ_{R}) is selected as the operating wavelength range in a color selection step.

2. A method in accordance with claim 1, **characterized in that** a signal level of the type which lies at least substantially centrally between the mark signal level (17) and the closest background signal level (19) is set in a threshold setting step as a switch threshold (21) for the generation of a mark determination signal.

3. A method in accordance with claim 2, **characterized in that** a check is made in a threshold setting step whether a further background signal level lies beyond the mark signal level (17) for the operating wavelength range with respect to the closest background signal level (19); and **in that**, if this is so, a signal level of the type which lies at least substantially centrally between the mark signal level and the further background signal level for the operating wavelength range is set as a further switch threshold and all those signal levels which lie between the switch threshold and the further switch threshold are set as the switch level range in a range setting step.

4. A method in accordance with claim 2, **characterized in that**, if the mark signal level (17) is higher than the closest background signal level (19), all those signal levels which lie above the switch threshold (21) for the operating wavelength range are set as the switch level range in a range setting step; and **in that**, otherwise, all those signal levels which lie below the switch threshold (21) for the operating wavelength range are set as the switch level range in the range setting step.

5. A method in accordance with claim 3 or claim 4, **characterized in that** a mark detection signal is generated in the operation of the light contrast detector if a signal level lies within the switch level range on the exposure of the monitored zone to transmitted light of the operating wavelength range.

6. A method in accordance with any one of the preceding claims, **characterized in that** the monitored zone (49) is successively exposed, in particular alternatively in a cycle and/or clocked, to the transmitted light of the respective plurality of test wavelength ranges in the level recording step; and/or **in that** the mark (11, 12) is moved along the monitored zone (49) during the level recording step.

7. A method in accordance with any one of the preceding claims, **characterized in that** a plurality of steps from the level recording step, the difference determination step, the color selection step, the threshold setting step and the range setting step, in particular all steps, are carried out substantially simultaneously; or **in that** the level recording step, the difference determination step, the color selection step, the threshold setting step and the range setting step are carried out successively.

8. A method in accordance with any one of the preceding claims, **characterized in that** the procedure is ended automatically if a further mark (12) is recognized inside the monitored zone (49); and/or **in that** the monitored zone (49) is exposed to transmitted light from three different test wavelength ranges, in particular with transmitted light of a red test wavelength range, of a green test wavelength range and of a blue test wavelength range, in the level recording step.

9. A light contrast detector for the recognition of marks (11, 12) and for the carrying out of the method in accordance with any one of the preceding claims,
with a light transmitter (25) for the transmission of transmitted light through an optical transmission system (29, 33, 37), with a light receiver (47) for the reception of reflected or remitted transmitted light and with a control and evaluation device,
**characterized in that**
the light transmitter (25) is designed for the transmission of transmitted light of a plurality of different test wavelength ranges;
**in that** the light contrast detector has means for the determination of a closest background signal level and of the difference between a mark signal level and the closest background signal level, i.e. a minimum level difference, for each test wavelength range; and **in that** the light contrast detector comprises means for the selection of the largest minimum level difference.

10. A light contrast detector in accordance with claim 9, **characterized in that**, for the transmission of transmitted light of a plurality of different test wavelength ranges, the light transmitter (25) has a corresponding number of transmitter elements, in particular a plurality of light emitting diodes (27), spatially adjacent to one another.

11. A light contrast detector in accordance with claim 10, **characterized in that** the transmitter elements (27) are arranged along a row and/or within a common housing (25).

12. A light contrast detector in accordance with any one of the claims 9 to 11, **characterized in that** the test wavelength ranges lie in the red wavelength range, in the green wavelength range of light and in the blue wavelength range of light.

13. A light contrast detector in accordance with any one of the claims 9 to 12, **characterized in that** the optical transmission system (29, 33, 37) is designed for the spatially overlapping imaging of the transmitted light of the plurality of test wavelength ranges such that the overlapping region forms a common monitored zone (49) of the light contrast detector, wherein the optical transmission system in particular has a cylindrical lens (29) through which the transmitted light of a transmitter element (27) can ultimately be imaged onto the monitored zone as a transmitted ray of longitudinally oval shape in cross-section.

14. A light contrast detector in accordance with any one of the claims 9 to 13, **characterized in that** the light transmitter (25) is designed for the sequential transmission of transmitted light of the different test wavelength ranges; and/or **in that** the light receiver is made as an individual receiver element, in particular as a photo diode (47).

15. A light contrast detector in accordance with any one of the claims 9 to 14, **characterized in that** a color change cycle can be generated by the control and evaluation circuit by which the light transmitter (25) can be stimulated for the alternate transmission of transmitted light of a respective other one of the test wavelength ranges; and **in that** a signal level of the light receiver of the type which is associated with one of the test wavelength ranges can be read in by the control and evaluation device in accordance with the color change cycle.

## Revendications

1. Procédé pour établir les conditions de fonctionnement d'un détecteur de contraste lumineux,
dans lequel un repère (11), devant être identifié lors du fonctionnement du détecteur de contraste lumineux, est amené dans une zone de surveillance (49) du détecteur de contraste lumineux, devant un arrière-plan (13, 15) ou à côté de celui-ci,
**caractérisé en ce que,**
préalablement au fonctionnement du détecteur de contraste lumineux,
- au cours d'une étape d'enregistrement de niveau, en sollicitant la zone de surveillance (49) avec de la lumière émise de plusieurs plages de longueurs d'ondes de test différentes, les niveaux de signaux (17 et/ou 18) de la lumière réfléchie ou renvoyée par le repère (11, 12) et des zones d'arrière-plan (13, 15) différentes les unes des autres au niveau de la couleur (niveau de signal de repère et/ou niveau de signal d'arrière-plan) sont respectivement déterminés au moyen d'un récepteur de lumière (47),
- au cours d'une étape de détermination de différence pour chaque plage de longueurs d'ondes de test, le niveau de signal d'arrière-plan (19) le plus proche du niveau de signal de repère (17) (niveau de signal d'arrière-plan le plus proche) est déterminé et la différence (Δ_{R}, Δ_{G} et/ou Δ_{B}) entre le niveau de signal de repère (17) et le niveau de signal d'arrière-plan le plus proche (19) (différence minimale de niveaux) est définie, et
- au cours d'une étape de sélection de couleur, la plage de longueurs d'ondes de test présentant la plus grande différence minimale de niveaux (Δ_{R}) est choisie en tant que plage de longueurs d'ondes de service.

2. Procédé selon la revendication 1,
**caractérisé en ce que,**
au cours d'une étape de définition de seuil, on définit, en tant que seuil de commutation (21) pour la génération d'un signal de constatation de repère, un niveau de signal qui, pour la plage de longueurs d'ondes de service, se situe au moins pour l'essentiel au centre entre le niveau de signal de repère (17) et le niveau de signal d'arrière-plan le plus proche (19).

3. Procédé selon la revendication 2,
**caractérisé en ce que,**
durant l'étape de définition de seuil, on vérifie si, pour la plage de longueurs d'ondes de service concernant le niveau de signal d'arrière-plan le plus proche (19), un autre niveau de signal d'arrière-plan se trouve au-delà du niveau de signal de repère (17), et
**en ce que**, dans l'affirmative, on définit en tant qu'autre seuil de commutation un niveau de signal qui, pour la plage de longueurs d'ondes de service, se situe au moins pour l'essentiel au centre entre le niveau de signal de repère et l'autre niveau de signal d'arrière-plan, et, au cours d'une étape de définition de plage, on définit en tant que plage de niveaux de commutation tous les niveaux de signaux situés entre le seuil de commutation et l'autre seuil de commutation.

4. Procédé selon la revendication 2,
**caractérisé en ce que,**
dans le cas où le niveau de signal de repère (17) est supérieur au niveau de signal d'arrière-plan le plus proche (19), on définit au cours d'une étape de définition de plage, en tant que plage de niveaux de commutation, tous les niveaux de signaux qui, pour la plage de longueurs d'ondes de service, se situent au-dessus du seuil de commutation (21), et
**en ce que**, dans le cas contraire, on définit au cours de l'étape de définition de plage, en tant que plage de niveaux de commutation, tous les niveaux de signaux qui, pour la plage de longueurs d'ondes de service, se situent au-dessous du seuil de commutation (21).

5. Procédé selon la revendication 3 ou la revendication 4,
**caractérisé en ce que**
un signal de constatation de repère est généré, lors du fonctionnement du détecteur de contraste lumineux, dans le cas où un niveau de signal se situe à l'intérieur de la plage de niveaux de commutation lors d'une sollicitation de la zone de surveillance avec de la lumière émise de la plage de longueurs d'ondes de service.

6. Procédé selon l'une des revendications précédentes,
**caractérisé en ce que,**
au cours de l'étape d'enregistrement de niveau, la zone de surveillance (49) est sollicitée à chaque fois et successivement avec la lumière émise des plusieurs plages de longueurs d'ondes de test, en particulier avec une alternance cyclique et/ou de façon synchronisée, et/ou
**en ce que** le repère (11, 12) est mis en mouvement le long de la zone de surveillance (49) au cours de l'étape d'enregistrement de niveau.

7. Procédé selon l'une des revendications précédentes,
**caractérisé en ce que,**
parmi les étapes d'enregistrement de niveau, de détermination de différence, de sélection de couleur, de définition de seuil et de définition de plage, plusieurs étapes, notamment toutes les étapes, sont mises en oeuvre sensiblement simultanément, ou **en ce que** l'étape d'enregistrement de niveau, l'étape de détermination de différence, l'étape de sélection de couleur, l'étape de définition de seuil et l'étape de définition de plage sont mises en oeuvre de façon successive.

8. Procédé selon l'une quelconque des revendications précédentes,
**caractérisé en ce que**
il est automatiquement mis un terme au procédé lorsqu'un autre repère (12) est identifié à l'intérieur de la zone de surveillance (49), et/ou
**en ce que**, au cours de l'étape d'enregistrement de niveau, la zone de surveillance (49) est sollicitée avec de la lumière émise émanant de trois plages différentes de longueurs d'ondes de test, notamment avec de la lumière émise d'une plage rouge, d'une plage verte et d'une plage bleue de longueurs d'ondes de test.

9. Détecteur de contraste lumineux pour l'identification de repères (11, 12) et pour la mise en oeuvre du procédé selon l'une quelconque des revendications précédentes,
comprenant un émetteur de lumière (25) pour diffuser de la lumière émise par l'intermédiaire d'une optique émettrice (29, 33, 37), un récepteur de lumière (47) pour recevoir de la lumière émise réfléchie ou renvoyée et un circuit de commande et d'analyse,
**caractérisé en ce que**
l'émetteur de lumière (25) est conçu pour diffuser de la lumière émise de plusieurs plages différentes de longueurs d'ondes de test,
**en ce que** le détecteur de contraste lumineux comporte des moyens pour déterminer un niveau de signal d'arrière-plan le plus proche et la différence entre un niveau de signal de repère et le niveau de signal d'arrière-plan le plus proche, c'est-à-dire une différence minimale de niveaux, pour chaque plage de longueurs d'ondes de test, et
**en ce que** le détecteur de contraste lumineux comporte des moyens pour sélectionner la plus grande différence minimale de niveaux.

10. Détecteur de contraste lumineux selon la revendication 9,
**caractérisé en ce que**
l'émetteur de lumière (25) comporte, en vue de la diffusion de lumière émise de plusieurs plages différentes de longueurs d'ondes de test, un nombre correspondant d'éléments émetteurs voisins les uns des autres dans l'espace, notamment plusieurs diodes (27) émettrices de lumière.

11. Détecteur de contraste lumineux selon la revendication 10,
**caractérisé en ce que**
les éléments émetteurs (27) sont disposés le long d'une rangée et/ou à l'intérieur d'un boîtier (25) commun.

12. Détecteur de contraste lumineux selon l'une des revendications 9 à 11,
**caractérisé en ce que**
les plages de longueurs d'ondes de test se situent dans les plages rouge, verte et bleue de longueurs d'ondes de la lumière.

13. Détecteur de contraste lumineux selon l'une des revendications 9 à 12,
**caractérisé en ce que**
l'optique émettrice (29, 33, 37) est conçue pour la représentation, avec chevauchement dans l'espace, de la lumière émise des plusieurs plages de longueurs d'ondes de test, de sorte que la zone chevauchante forme une zone de surveillance (49) commune du détecteur de contraste lumineux,
sachant que l'optique émettrice comporte notamment une lentille cylindrique (29), par l'intermédiaire de laquelle la lumière émise d'un élément émetteur (27) peut être représentée à chaque fois et en définitive comme un faisceau d'émission de section transversale ovalisée sur la zone de surveillance.

14. Détecteur de contraste lumineux selon l'une des revendications 9 à 13,
**caractérisé en ce que**
l'émetteur de lumière (25) est conçu pour la diffusion s'effectuant de façon successive de lumière émise des différentes plages de longueurs d'ondes de test, et/ou
**en ce que** le récepteur de lumière est conçu comme un élément récepteur individuel, notamment comme une photodiode (47).

15. Détecteur de contraste lumineux selon l'une des revendications 9 à 14,
**caractérisé en ce que**
le circuit de commande et d'analyse permet de générer une cadence de changement de couleur pouvant inciter l'émetteur de lumière (25) à diffuser en alternance de la lumière émise à chaque fois par une autre des plages de longueurs d'ondes de test, et
**en ce que** le circuit de commande et d'analyse permet d'entrer à chaque fois, en fonction de la cadence de changement de couleur, un niveau de signal respectif du récepteur de lumière qui est affecté à l'une des plages de longueurs d'ondes de test.
